(19) Europäisches Patentamt
European Patent Office
Office européen des brevets

(11) **EP 3 578 789 A1**

(12) **EUROPEAN PATENT APPLICATION**
published in accordance with Art. 153(4) EPC

(43) Date of publication:
**11.12.2019 Bulletin 2019/50**

(21) Application number: **18764270.7**

(22) Date of filing: **22.02.2018**

(51) Int Cl.:
*F02F 3/00* (2006.01)   *F02F 7/00* (2006.01)
*F16C 9/02* (2006.01)   *F16C 17/02* (2006.01)
*F16J 1/02* (2006.01)   *F16J 1/04* (2006.01)

(86) International application number:
**PCT/JP2018/006484**

(87) International publication number:
**WO 2018/163847 (13.09.2018 Gazette 2018/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.03.2017   JP 2017041850**

(71) Applicant: **Mazda Motor Corporation
Aki-gun, Hiroshima 730-8670 (JP)**

(72) Inventor: **ADACHI, Takamasa
Aki-gun
Hiroshima 730-8670 (JP)**

(74) Representative: **Herrmann, Uwe
Lorenz Seidler Gossel
Rechtsanwälte Patentanwälte
Partnerschaft mbB
Widenmayerstraße 23
80538 München (DE)**

(54) **RECIPROCATING PISTON ENGINE**

(57)   A projecting-shape portion 31S projecting toward a first sliding surface 2A in a section along a sliding direction of a second sliding surface 31S is provided on the second sliding surface 31S which slides relative to the first sliding surface 2A, and an apical portion Ps, which is a most projecting part, and a bottom edge portion Qs, which is arranged at least on a downstream side of the apical portion in the sliding direction of the second sliding surface 31S and is at a position that is most spaced apart from the first sliding surface 2A, are provided on the projecting-shape portion 31S, and when a gap between the first sliding surface 2A and the second sliding surface 31S at the apical portion Ps is assumed to be a minimum gap h1 and a gap at the bottom edge portion Qs is assumed to be a maximum gap h2, h1 is set to be within a range of 0.5 $\mu$m to 40 $\mu$m and h2/h1 is set to be within a range of 1.5 to 5.0.

FIG. 6

EP 3 578 789 A1

## Description

### Technical Field

The present invention relates to a reciprocating piston engine including a piston which reciprocates in a cylinder and a crank mechanism.

### Background Art

It has been conventionally considered to reduce a mechanical loss for increasing fuel consumption performance of an engine.

For example, Patent Literature 1 discloses a reciprocating piston engine including a piston which reciprocates in a cylinder, the reciprocating piston engine being designed to reduce a mechanical loss by reducing a friction resistance generated between an outer peripheral wall of the piston and an inner peripheral wall of the cylinder.

Specifically, the engine of Patent Literature 1 is configured such that a dynamic pressure is generated in a plurality of minute recessed portions formed in a covering layer provided on an outer peripheral wall of the piston in order to float the piston from the inner peripheral wall of the cylinder for reducing the friction resistance.

### Citation List

### Patent Literature

Patent Literature 1: Japanese Unexamined Patent Publication No. 2016-121597

### Summary of Invention

However, when the piston reciprocates, in particular, when a load imposed on the piston is heavy, it is difficult to appropriately float the piston from the inner peripheral wall of the cylinder only with a dynamic pressure generated in each recessed portion. Reduction in a mechanical loss is therefore limited.

The present invention has been made in light of the above-described circumstances, and an object of the present invention is to provide a reciprocating piston engine in which a mechanical loss can be reduced as much as possible by reliably floating a sliding member provided in the engine with a simple configuration.

### Problems to be Solved by the Invention

In order to solve the problem, the present invention provides a reciprocating piston engine provided with a piston reciprocating in a cylinder and a crank mechanism, the reciprocating piston engine including a first member having a first sliding surface; and a second member which has a second sliding surface opposed to the first sliding surface with a gap provided between the first sliding surface and the second sliding surface and moves relative to the first member in a predetermined sliding direction during reciprocation of the piston, in which the second sliding surface has a projecting-shape portion projecting toward the first sliding surface in a section along the sliding direction, the projecting-shape portion includes an apical portion which is a most projecting part, and a bottom edge portion which is arranged at least on a downstream side of the apical portion in the sliding direction and is at a position most spaced apart from the first sliding surface, and when in the projecting-shape portion, the gap at the apical portion is assumed to be a minimum gap $h1$ and the gap at the bottom edge portion is assumed to be a maximum gap $h2$, the minimum gap $h1$ and the maximum gap $h2$ are set to be within the following range in a state where the first member and the second member are at room temperature: $h1 = 0.5 \,\mu m$ to $40 \,\mu m$; and $h2/h1 = 1.5$ to $5.0$.

The present invention enables a mechanical loss to be reduced as much as possible by reliably floating a sliding member provided in the engine with a simple configuration.

### Brief Description of Drawings

FIG. 1 is a schematic view showing a reciprocating piston engine according to the present invention.
FIG. 2 is a schematic view of a section taken along line II-II in FIG. 1.
FIG. 3 is a schematic view of a section taken along line III-III in FIG. 2.
FIG. 4 is a view showing relationship between a connecting rod and a crank shaft.

FIG. 5 is a view showing relationship between the connecting rod and the crank shaft.

FIG. 6 is an enlarged view showing the surroundings of a piston.

FIG. 7 is a schematic view of a section taken along line VII-VII in FIG. 6.

FIG. 8 is a view schematically showing a skirt sliding surface.

FIG. 9 is a view for explaining a profile of an optimum sliding surface.

FIG. 10 is a graph showing relationship between a gap ratio and a coefficient of floating capacitance.

FIG. 11 is a graph showing relationship between a minimum gap and a coefficient of friction.

FIG. 12 is a view for explaining oscillation of the piston.

FIG. 13 is a schematic sectional view of the surroundings of a crank journal portion.

FIG. 14 is a schematic view of the surroundings of a connecting rod large end portion.

FIG. 15A is a front view of a piston according to a second embodiment, and FIG. 15B is a side view of the piston.

FIG. 16 is a sectional view taken along line XVI-XVI in FIG. 15A.

FIG. 17 is a sectional view taken along line XVII-XVII in FIG. 15A.

FIG. 18A is a schematic view of a skirt portion in a neutral state and FIG. 18B is a schematic view of the skirt portion when oscillation occurs.

FIGS. 19A to C are views for explaining a swing state of the skirt portion as the piston reciprocates.

**Description of Embodiments**

In the following, a reciprocating piston engine according to the embodiment of the present invention will be described with reference to the drawings. The embodiment below is one example embodying the present invention and by no means limits a technical range of the present invention.

(1) Overall Structure of Engine

A reciprocating piston engine 100 according to the embodiment of the present invention is an engine provided with a piston 5 which reciprocates in a cylinder 2, and a crank mechanism, and includes an engine main body 1 in which the cylinder 2 is formed. The reciprocating piston engine 100 is mounted on a vehicle as, for example, a power source for driving of a vehicle such as an automobile, or as a device which assists a motor or the like used as a driving source of a vehicle.

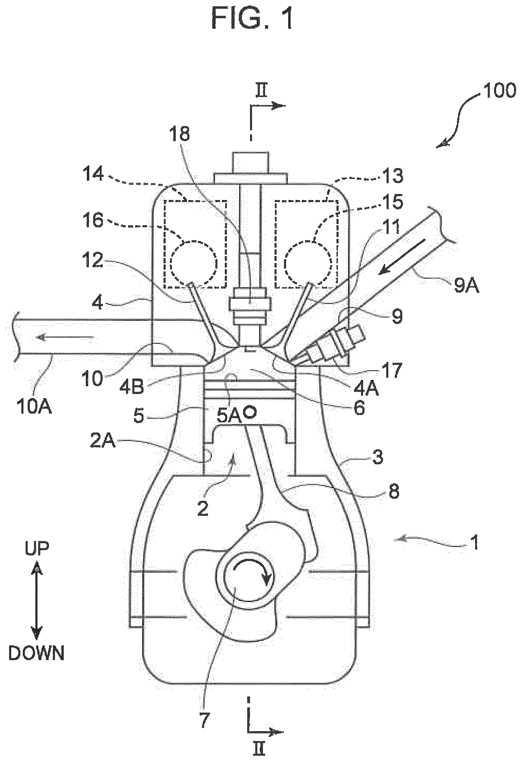

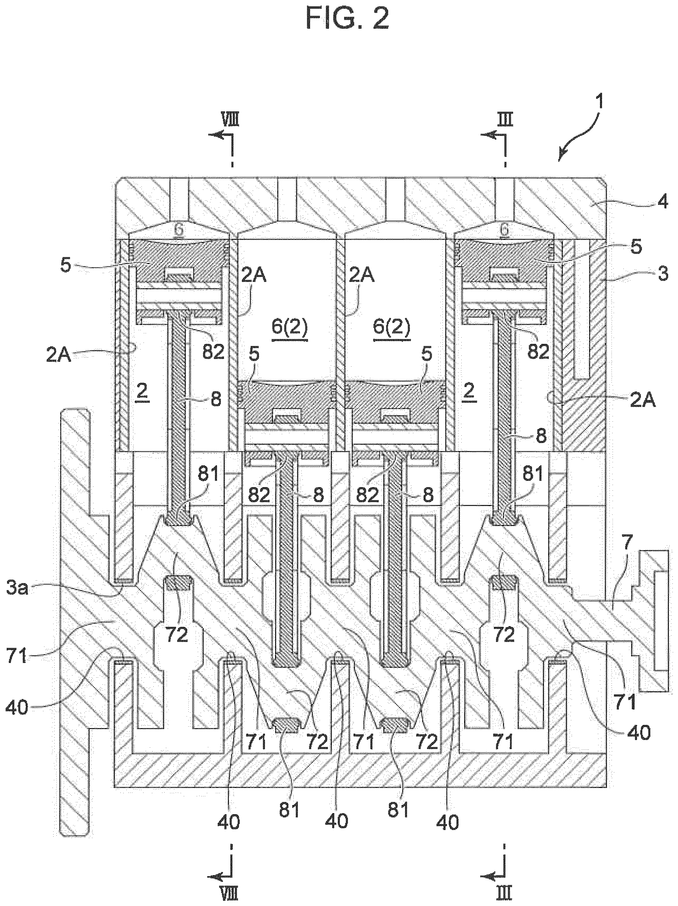

FIG. 1 is a schematic view showing the reciprocating piston engine 100. FIG. 2 is a schematic view of a section taken along line II-II in FIG. 1. The engine main body 1 includes a cylinder block 3 in which the cylinder 2 is formed, and a cylinder head 4 attached to the cylinder block 3. In the following, description will be made assuming an up-down direction in FIG. 1, which is a center axis direction of the cylinder 2, to be the up-down direction, with the cylinder head 4 side as up and the cylinder block 3 side as down.

As shown in FIG. 2, in the present embodiment, the engine main body 1 is an in-line 4-cylinder engine in which the cylinder block 3 has four cylinders 2 formed in line. The cylinder 2 is supplied with fuel containing, for example, gasoline as a main component, so that an air-fuel mixture of the fuel and air is burned in the cylinder 2.

In each cylinder 2, the piston 5 is housed to be capable of reciprocating in the up-down direction. In the cylinder 2, a combustion chamber 6 in which the air-fuel mixture is burned is zoned by a crown surface 5A of the piston 5, an inner peripheral wall 2A of the cylinder 2, and a lower surface of the cylinder head 4.

In the cylinder head 4, an intake port 9 and an exhaust port 10 which communicate with the combustion chamber 6 are formed. An intake side opening portion 4A as a downstream end of the intake port 9 and an exhaust side opening portion 4B as an upstream end of the exhaust port 10 are formed on a bottom surface of the cylinder head 4. An intake valve 11 which opens/closes the intake side opening portion 4A and an exhaust valve 12 which opens/closes the exhaust side opening portion 4B are assembled into the cylinder head 4. The engine of the present embodiment is a double overhead cam shaft (DOHC) engine. Two of the intake side opening portions 4A and two of the exhaust side opening portions 4B are provided in each cylinder 2 and two of the intake valves 11 and two of the exhaust valves 12 are provided as well.

An ignition plug 18 is attached to the cylinder head 4 for each cylinder 2, the ignition plug being for supplying ignition energy to the air-fuel mixture in the combustion chamber 6. An injector 17, one for each cylinder 2, is also attached to the cylinder head 4, the injector being for injecting fuel into the combustion chamber 6.

An upper end portion 82 of a connecting rod 8 is coupled to each piston 5. A crank shaft 7 extending in an alignment direction of the cylinder 2 is coupled to a lower end portion 81 of each connecting rod 8. When an air-fuel mixture is burned in the combustion chamber 6, the piston 5 and the connecting rod 8 reciprocate in the up-down direction, along with which the crank shaft 7 rotates around its center axis. The crank shaft 7 and the connecting rod 8 are members forming the crank mechanism of the engine.

(2) Structure of Crank Mechanism

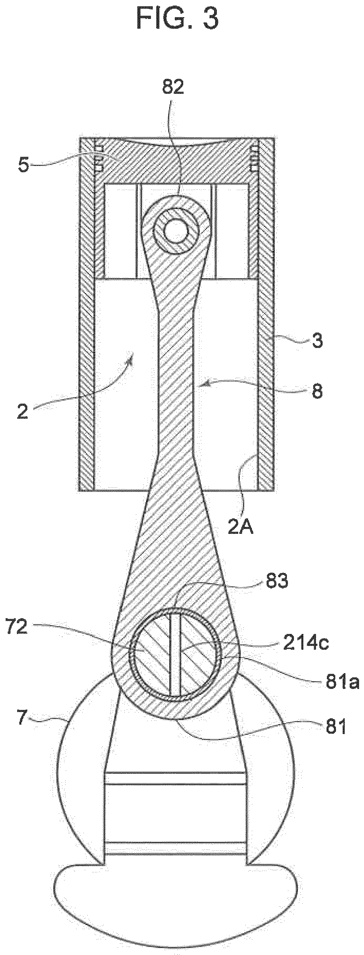

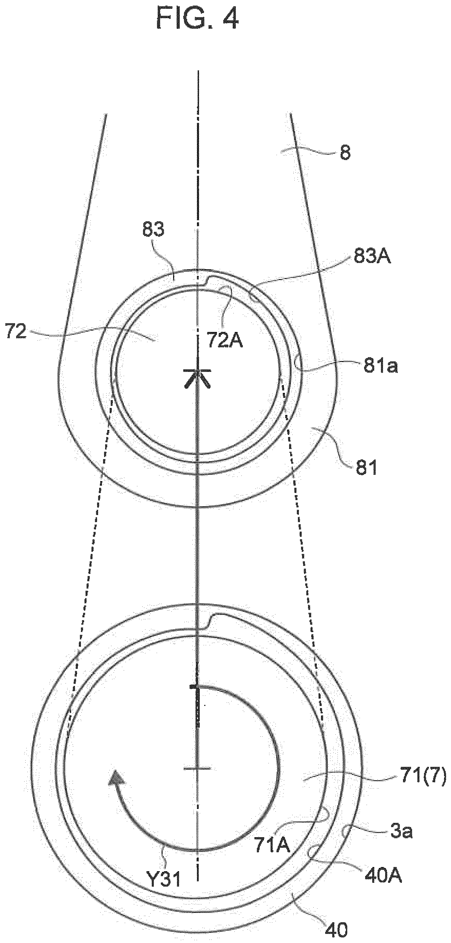

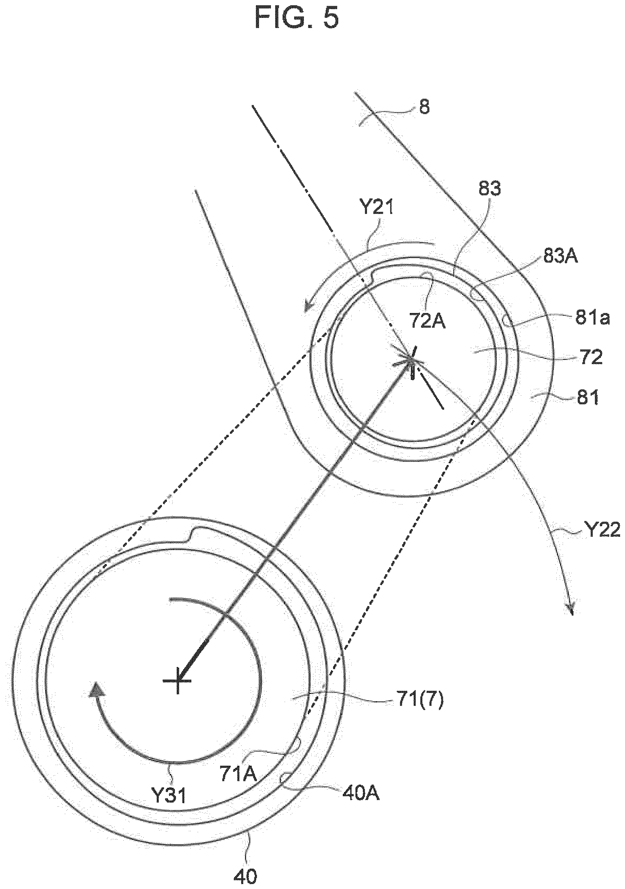

FIG. 3 is a schematic view of a section taken along line III-III in FIG. 2. FIG. 4 and FIG. 5 are views showing relationship between the connecting rod 8 and the crank shaft 7.

The crank shaft 7 has a plurality of generally columnar crank journal portions 71 centered around a rotation axis of the crank shaft, and crank pins 72 inserted into the lower end portions 81 of the connecting rods 8. The crank pins 72 are provided between these crank journal portions 71. In the following, the lower end portion 81 of the connecting rod 8 will be appropriately referred to as a connecting rod large end portion 81.

In the cylinder block 3, a plurality of through holes 3a (in the illustration, five through holes 3a) arranged in the alignment direction of the cylinder 2 are formed at positions below the piston 5. Generally annular crank bearings (second members) 40 are fit in these through holes 3a. The crank journal portion (first member) 71 is inserted into the crank bearing 40 and is rotatably supported. An outer peripheral wall (first sliding surface) 71A of the crank journal portion 71 slides along an inner peripheral wall (second sliding surface) 40A of the crank bearing 40. In the example of FIG. 4, the crank journal portion 71 rotates in a direction indicated by an arrow Y31.

The connecting rod large end portion 81 has a generally circular through hole 81a formed. A generally annular crank pin bearing 83 which rotates integrally with the connecting rod large end portion 81 is fit in the through hole 81a. The crank pin 72 of the crank shaft 7 is inserted into the crank pin bearing 83 and is supported by the crank pin bearing 83 so as to be rotatable relative to the crank pin bearing.

The connecting rod 8 including the crank pin bearing 83 and the crank shaft 7 including the crank pin 72 rotate relative to each other as shown in FIG. 4 and FIG. 5. Specifically, when the piston 5 lowers from a state shown in FIG. 4, the connecting rod 8 including the crank pin bearing 83 lowers while rotating in a direction indicated by an arrow Y21 (counterclockwise in FIG. 5) and the crank pin 72 revolves around a center axis of the crank journal portion 71 in a direction indicated by an arrow Y22 (clockwise in FIG. 5) as shown in FIG. 5. Further, at this time, the crank pin bearing 83 rotates relatively to the crank pin 72 in the direction indicated by the arrow Y21 (counterclockwise in FIG. 5). Then, as the piston 5 reciprocates, an outer peripheral wall 72A (first sliding surface) of the crank pin 72 (first member) slides relatively to an inner peripheral wall 83A (second sliding surface) of the crank pin bearing (second member) 83 in the direction indicated by the arrow Y21.

(3) Structure of Piston

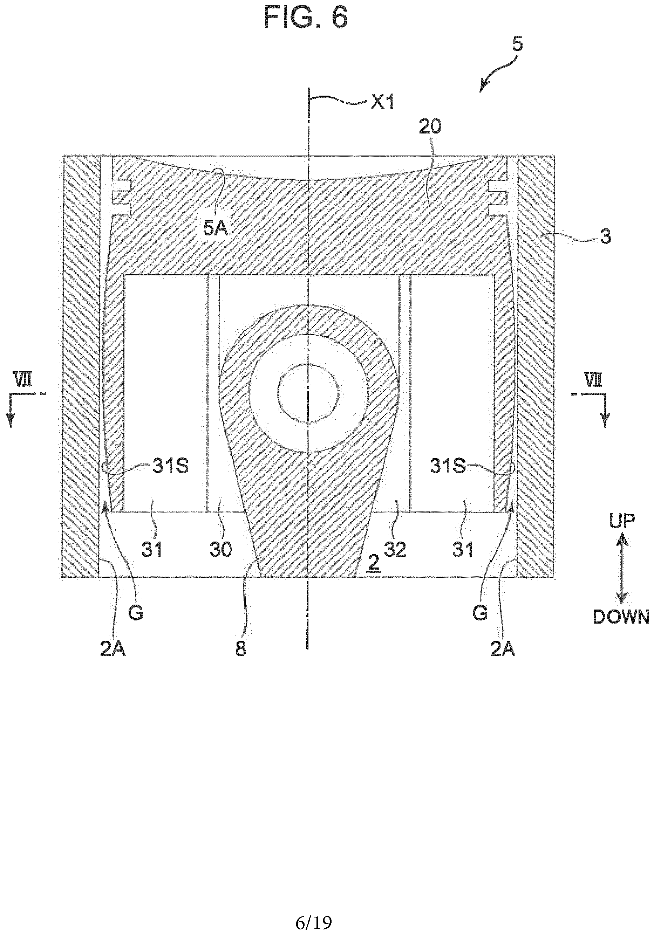

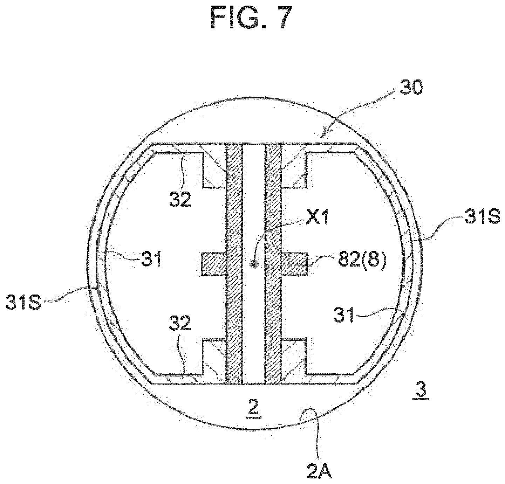

FIG. 6 is an enlarged view of a part of FIG. 3 and shows the surroundings of the piston 5. FIG. 7 is a schematic view of a section taken along line VII-VII in FIG. 6. The piston 5 includes a piston head portion 20 which forms an upper part of the piston and has the crown surface 5A, and a skirt portion 30 arranged below the piston head portion 20. In the present embodiment, the piston head portion 20 and the skirt portion 30 are molded as an integral body.

As shown in FIG. 7, the skirt portion 30 includes a pair of skirt main body portions 31 extending, in a section orthogonal to the up-down direction, circularly along the inner peripheral wall 2A of the cylinder 2, and a pair of flat plate portions 32 positioned between these skirt main body portions 31 and having a generally flat plate-shaped outer peripheral surface. The skirt main body portions 31 have a shape symmetrical with each other relative to a plane along a center axis X1 of the piston 5, and in the following, one of the skirt main body portions 31 will be described.

The skirt main body portion (second member) 31 has an outer peripheral wall 31S (second sliding surface) on a plane opposed to the inner peripheral wall (first sliding surface) 2A of the cylinder 2 (first member), the outer peripheral wall 31S sliding upward and downward along the inner peripheral wall 2A as the piston 5 reciprocates. In the following, the outer peripheral wall 31S of the skirt main body portion 31 will be referred to as the skirt sliding surface 31S. The present embodiment has a configuration to supply a lubricating fluid between an outer peripheral wall of the piston 5 and the inner peripheral wall 2A of the cylinder 2, so that the lubricating fluid is present between the skirt sliding surface 31S and the inner peripheral wall 2A of the cylinder 2. As the lubricating fluid, any of air, water, and oil is used.

<Skirt Sliding Surface>

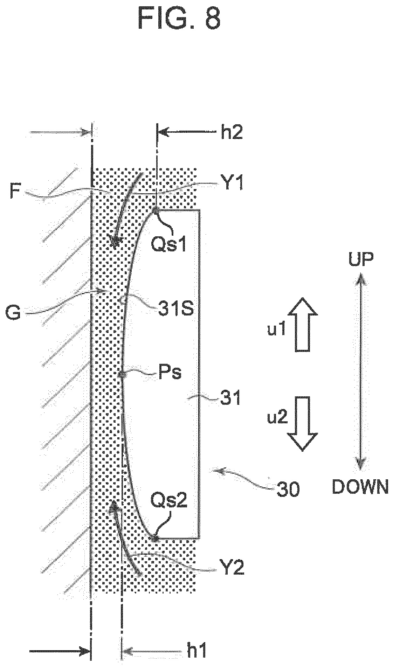

Subsequently, the skirt sliding surface 31S will be detailed. FIG. 8 is a view, which corresponds to an enlargement of a part of FIG. 6, schematically showing the skirt sliding surface 31S.

The skirt main body portion 31 is configured to have a gap G formed between the skirt sliding surface 31S and the inner peripheral wall 2A of the cylinder 2.

The skirt sliding surface 31S has an arch-shape projecting toward the inner peripheral wall 2A of the cylinder 2 in a section along the center axis X1 of the cylinder 2, i.e., in a section along a sliding direction of the skirt sliding surface 31S. In the present embodiment, the skirt sliding surface 31S in entirety forms a projecting-shape portion which projects toward the inner peripheral wall 2A of the cylinder 2 in the section along the sliding direction of the skirt sliding surface. In the present embodiment, relative to a central part thereof, the skirt sliding surface 31S has a shape substantially symmetrical in the up-down direction.

The skirt sliding surface 31S has an apical portion Ps positioned in a central part thereof in the up-down direction and projecting most to the inner peripheral wall 2A side of the cylinder 2, and bottom edge portions Qs (Qs1, Qs2) positioned at both end parts in the up-down direction and projecting least to the inner peripheral wall 2A side of the cylinder 2, i.e., located at a position most spaced apart from the inner peripheral wall 2A of the cylinder 2.

The upper side bottom edge portion Qs1 is a part which will be a downstream end in the sliding direction of the skirt sliding surface 31S when the piston 5 moves upward and the skirt sliding surface slides upward, and the lower side bottom edge portion Qs2 is a part which will be a downstream end in the sliding direction of the skirt sliding surface 31S when the piston 5 moves downward and the skirt sliding surface 31S slides downward. The skirt sliding surface 31S is configured to gradually project less and less from each bottom edge portion Qs (Qs1, Qs2) toward the apical portion Ps.

For facilitating understanding of FIG. 6 and FIG. 8, the arch-shape of the skirt sliding surface 31S is illustrated to have a largely exaggerated arch-shape, and in practice, the skirt sliding surface 31S has an arch-shape projecting on the order of microns which is hard to be visually distinguished as will be described later.

Thus, configuring the skirt sliding surface 31S to have an arch-shape is for suppressing a sliding resistance between the skirt sliding surface 31S and the inner peripheral wall 2A of the cylinder 2 when the skirt sliding surface 31S slides upward or downward.

Specifically, when a velocity u is applied to the skirt portion 30 as the piston 5 reciprocates, because of the presence of the gap G, a lubricating fluid F present in the surroundings is drawn from a downstream side in the sliding direction to a part between the sliding surfaces(between the skirt sliding surface 31S and the inner peripheral wall 2A of the cylinder 2) as indicated by arrows Y1 and Y2 in FIG. 8. At this time, if the amount of projection of the skirt sliding surface 31S is small from the bottom edge portion Qs toward the apical portion Ps as described above, the lubricating fluid F entering between the sliding surfaces is intercepted to have no escape. As a result, the lubricating fluid F causes a force to be generated between the skirt sliding surface 31S and the inner peripheral wall 2A of the cylinder 2 in a direction to increase the gap therebetween, the force functioning to float the sliding surface 31S from the inner peripheral wall 2A. Hereinafter, a force by the lubricating fluid F to increase the gap will be appropriately referred to as sliding flotage and the function caused by the sliding flotage will be referred to as sliding flotage function.

Specifically, when the velocity u1 is applied upward to the skirt portion 30 during the rise of the piston 5, the lubricating fluid F enters the gap G from the upper side bottom edge portion Qs1 toward the apical portion Ps as indicated by the arrow Y1. This causes sliding flotage to be generated between the skirt sliding surface 31S and the inner peripheral wall 2A of the cylinder 2. On the other hand, when a velocity u2 is applied downward to the skirt portion 30 during the fall of the piston 5, the lubricating fluid F enters the gap G from the lower side bottom edge portion Qs2 toward the apical portion Ps as indicated by the arrow Y2. This causes sliding flotage to be generated between the skirt sliding surface 31S and the inner peripheral wall 2A of the cylinder 2.

Accordingly, by configuring the skirt sliding surface 31S to have an arch-shape as described above, it is possible to suppresses the skirt sliding surface 31S and consequently the skirt portion 30 and the piston 5 from contacting the inner peripheral wall 2A of the cylinder 2 when the piston 5 reciprocates, thereby reducing sliding resistances of these portions to reduce a mechanical loss. For example, even in a case where during reciprocation, the piston 5 conducts so-called oscillating movement to lean to the center axis of the cylinder 2, it is possible to suppress the outer peripheral wall of the piston 5 (the skirt sliding surface 31S) and the inner peripheral wall 2A of the cylinder 2 from contacting with each other.

The inventors of the present application, however, have found that just by simply configuring the skirt sliding surface 31S to have an arch-shape, sufficient sliding flotage function cannot be obtained and that there is a profile (surface shape: surface profile) of the skirt sliding surface 31S which can effectively realize the function.

(4) Profile of Sliding Surface

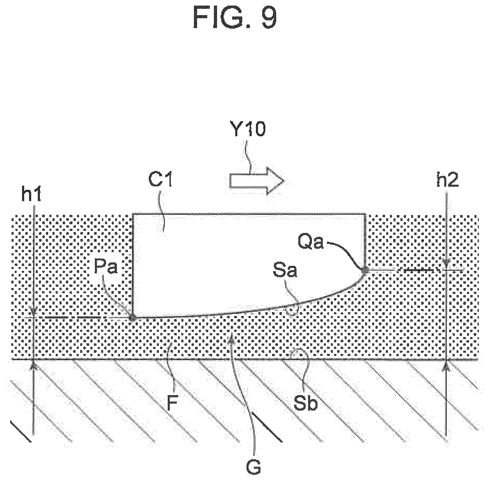

FIG. 9 is a schematic view showing that a sliding member C1 having a sliding surface Sa slides in a direction indicated by an arrow Y10 along a slid surface Sb. Here, description will be made of a profile applicable not only to the skirt sliding surface 31S but also to the whole of the sliding surface Sa of the sliding member C1 which is provided in the engine main body 1 and slides as the piston 5 reciprocates, with reference to FIG. 9.

As shown in FIG. 9, the sliding surface Sa has a projecting-shape which projects toward the slid surface Sb. Specifically, the sliding surface Sa has an apical portion Pa as a most projecting part, and a bottom edge portion Qa arranged on a downstream side of the apical portion Pa in a sliding direction (the direction indicated by the arrow Y10) and most spaced apart from the slid surface Sb. The sliding surface Sa has a shape gradually being spaced apart from the slid surface Sb toward the downstream side in the sliding direction.

When the sliding member C1 slides at a velocity U, sliding flotage W generated between the sliding surface Sa and the slid surface Sb can be obtained by Formula (1) below.

[Formula 1]

$$W = \frac{\eta U B^2 C}{h1^2} \cdot \frac{6}{(m-1)^2} \left\{ \ln m - \frac{2(m-1)}{m+1} \right\} \quad \cdots (1)$$

In Formula (1), η represents viscosity of the fluid F present between the sliding surface Sa and the slid surface Sb, B represents a length of the sliding surface in a sliding direction (a length from the apical portion Pa to the bottom edge portion Qa in FIG. 9), C represents a length in a direction orthogonal to the sliding direction of the sliding surface (a length in a direction orthogonal to the plane of the sheet in FIG. 9), and U represents a sliding velocity of the sliding surface Sa. h1 represents a minimum gap which is a spaced distance between the apical portion Pa and the slid surface Sb, i.e., a minimum value of a gap size between the sliding surface Sa and the slid surface Sb. m represents a gap ratio, a ratio of a maximum gap h2 to the minimum gap h1 which is expressed as m = h2/h1, with the maximum gap h2 being assumed to represent a maximum value of a spaced distance between the bottom edge portion Qa and the slid surface Sb, i.e. the gap size between the sliding surface Sa and the slid surface Sb.

In Formula (1), assuming the second term to be a coefficient of load capacitance Kw, (Kw = 6/(m - 1)2{lnm - 2(m - 1)/(m + 1)}) is established, and the flotage W is proportional to the coefficient of load capacitance Kw.

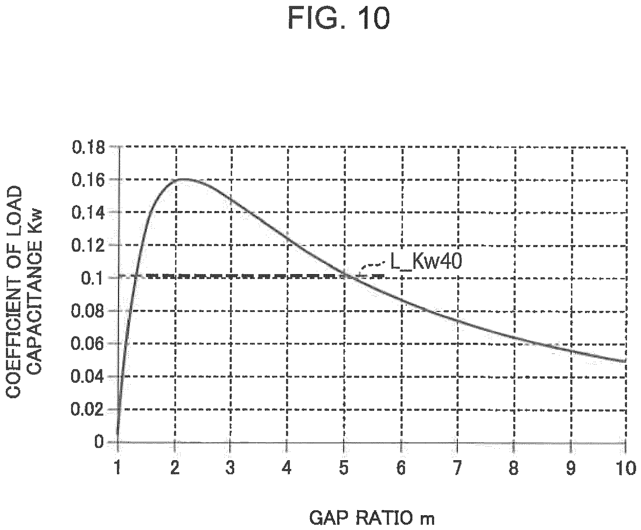

FIG. 10 is a graph showing relationship between the coefficient of load capacitance Kw and the gap ratio m. As indicated by the graph, the sliding flotage W becomes the largest when the gap ratio m is 2.2 and becomes smaller as the gap ratio m becomes more apart from the value.

In this manner, the high sliding flotage W can be obtained by setting the gap ratio m to be near 2.2. Specifically, when the gap ratio m is set to be 1.5 or more and 5.0 or less, as the sliding flotage W, a large value of line L_Kw 40 or more in FIG. 10 can be obtained, which is 60% or more of the maximum value (the value when the gap ratio m is 2.2).

When the gap ratio m becomes larger than an appropriate value (m = 2.2), the sliding flotage W becomes smaller. This is considered to be because as the minimum gap h1 becomes relatively small, the fluid F intercepting effect becomes excessively large to increase a ratio of the fluid F which cannot flow into a place between the slid surface Sb and the sliding surface Sa. Additionally, when the gap ratio m becomes smaller than the appropriate value (m = 2.2), the sliding flotage W becomes smaller. This is considered to be because the sliding surface Sa becomes close to the flat plate to reduce the fluid F intercepting effect.

Here, on the basis of Formula (1), the smaller the minimum gap h1 becomes, the larger the sliding flotage becomes. The small minimum gap h1 is accordingly considered preferable. In this respect, the inventors of the present application have found that the minimum gap h1 has an optimum range in which a coefficient of friction μ generated between the sliding surface Sa and the slid surface Sb can be suppressed to be small. A magnitude of the coefficient of friction μ corresponds to a magnitude of a friction at the time of slide floating of the sliding surface Sa, which indicates that the smaller the coefficient of friction μ becomes, the more excellent the slide floating can be.

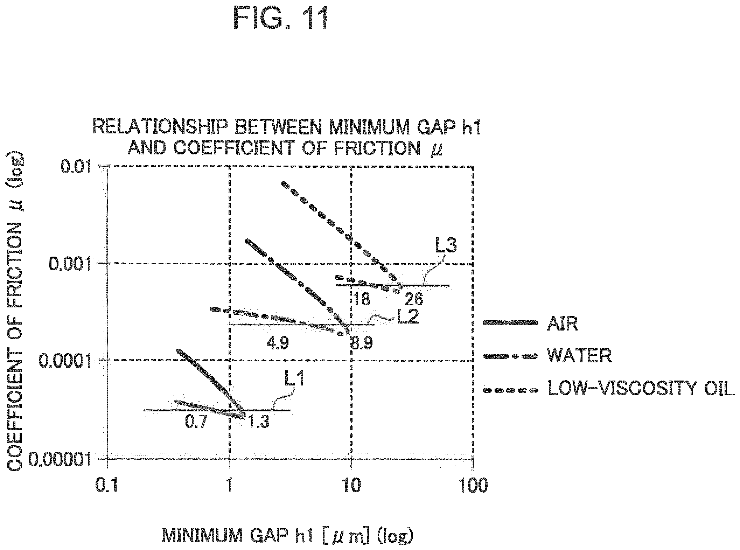

FIG. 11 is a graph showing relationship between the coefficient of friction μ and the minimum gap h1 assuming the fluid F to be air, water, or oil. A viscosity of air exemplified as the fluid F is 1.8 × 10 - 5 [Pa·s], a viscosity of water is 8.9 × 10 - 4 [Pa·s], and a viscosity of low-viscosity oil 0W-20 is 6.8 × 10 - 3 [Pa·s].

Specifically, FIG. 11 is a graph showing relationship between the minimum gap h1 and the coefficient of friction μ when the sliding surface Sa floats as a result of balancing between a maximum value of a load and the sliding flotage W obtained by Formula (1), the load being applied to the sliding surface Sa which slides along a predetermined slid surface as the piston 5 reciprocates during operation of the engine. In FIG. 11, as the minimum gap h1 changes, the gap ratio m changes as well.

More specifically, in Formula (1), an average moving speed of the sliding surface Sa to be a target when an engine speed is a predetermined typical speed is substituted for U, the viscosity of the fluid F is substituted for η, and the maximum value of the load is substituted for the sliding flotage W. Then, from Formula (1) in which these values are substituted, with a difference between the maximum gap h2 and the minimum gap h1 (h2 - h1) set to be a predetermined value, a value of the minimum gap h1 is calculated, and a coefficient of friction μ is also calculated using the minimum gap h1 and the like. Also, by changing the value of the minimum gap h1 by assigning different numerical values to the predetermined value, a coefficient of friction μ corresponding to each value is obtained. For example, focusing on street travelling, an input load to be applied to the sliding surface Sa can be set to 1175 N using 1350 rpm as an engine speed corresponding to U.

With respect to the respective fluids F, FIG. 11 shows lines L1, L2, L3 at which the coefficient of friction μ is increased by +20% from the coefficient of friction μ in an optimum minimum gap h1, i.e. the smallest coefficient of friction μ. The range up to +20% is a range where extremely excellent slide floating can be realized. Specifically, in a case of air as the fluid F, the minimum gap h1 is 0.7 μm to 1.3 μm, in a case of water, 4.9 μm to 8.9 μm, and in a case of 0W-

20, 18 $\mu$m to 26 $\mu$m.

Here, the range is a range of the minimum gap h1 to be ensured during operation of the engine main body 1. In other words, when the engine main body 1 is driven, a sliding surface which responsively slides and a sliding member having the sliding surface are intensively heated to thermally expand. Then, even in a case where the sliding member and a slid surface on which the sliding member slides are the same material, thermal distributions thereof are different to have a difference in thermal expansion. Accordingly, it is appropriate to set a design value with room temperature as a reference to be larger than the above upper limit value such that the above range can be ensured during operation of the engine. In view of this point, a range of the minimum gap h1 at room temperature (a range of the minimum gap h1 in a state where the sliding member and the slid member are at room temperature) in the present embodiment is set as shown below:

in a case of air: 0.5 $\mu$m or more and 1.5 $\mu$m or less;
in a case of water: 3 $\mu$m or more and 11 $\mu$m or less; and
in a case of 0W-20: 15 $\mu$m or more and 40 $\mu$m or less.

From the above result, the range of the minimum gap h1 which can realize excellent slide floating can be set to be 0.5 $\mu$m to 40 $\mu$m within the category of the fluid F (air, water, low-viscosity oil) currently usable for achieving slide floating.

Room temperature here represents a temperature on the order of 5°C to 35°C.

Here, as is clear from FIG. 11, in terms of slide floating, the most desirable fluid F is air from the viewpoint of reduction in a sliding resistance.

(5) Profile of Skirt Sliding Surface

From the foregoing knowledge, it is designed in the present embodiment that the fluid F to be present between the skirt sliding surface 31S and the inner peripheral wall 2A of the cylinder 2 is air and the minimum gap h1 is a predetermined value of 0.5 $\mu$m or more and 1.5 $\mu$m or less.

Also in the present embodiment, smoothness of the skirt sliding surface 31S is set to be high in order to ensure precision of the minimum gap h1. Specifically, since the minimum gap h1 is set to be within the range of a minute length as described above, when the skirt sliding surface 31S has a coarse surface, the precision of the minimum gap h1 is reduced. In the present embodiment, therefore, in response to setting of the minimum gap h1 of the skirt sliding surface 31S to 0.5 $\mu$m or more and 1.5 $\mu$m or less, surface roughness of each of the skirt sliding surface 31S and the inner peripheral wall 2A of the cylinder 2 is set to be 0.4 $\mu$m or less.

Also in the present embodiment, constituent members (the cylinder block 3 or a cylinder liner) of the skirt sliding surface 31S (the skirt portion 30 and consequently the piston 5) and the inner peripheral wall 2A of the cylinder 2 are made of the same material. This is for suppressing change of a length of the gap G derived from the thermal expansion difference, i.e. change of the minimum gap h1 and the maximum gap h2. In the present embodiment, the skirt sliding surface and the inner peripheral wall are made of stainless steel (stainless member, forged product) having a small coefficient of thermal expansion.

The description has been here made of a case where with the center axis of the piston 5 being substantially coincident with the center axis X1 of the cylinder 2 (hereinafter, it is appropriately referred to as a neutral state) as shown in FIG. 3, the skirt sliding surface 31S is configured to have the above profile. However, in a case where the piston 5 oscillates while reciprocating, i.e., where the center axis of the piston 5 leans to the center axis of the cylinder 2, the skirt sliding surface 31S is configured to keep the profile even in this oscillation state.

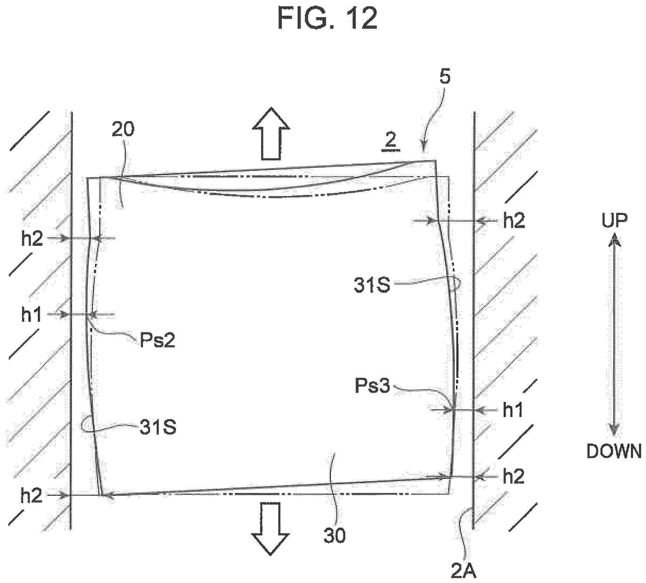

Specifically, as shown in FIG. 12, in a state where the piston 5 in the neutral state indicated by a broken line oscillates to lean leftward as indicated by a solid line, on the left-side skirt sliding surface 31S, a part, of the skirt sliding surface 31S, which has a minimum size of a gap with the inner peripheral wall 2A of the cylinder 2, i.e. an apical portion Ps2, will be located above the vertical center. On the other hand, on the right-side skirt sliding surface 31S, an apical portion Ps3 will be located below the vertical center. Then, the minimum gaps h1 on the right and left side skirt sliding surfaces 31S will consequently have sizes different from the minimum gaps h1 in the neutral state shown in FIG. 3. Additionally, the maximum gap (a maximum size of a spaced distance between the skirt sliding surface 31S and the inner peripheral wall 2A of the cylinder 2 on the downstream of the apical portions Ps2 and Ps3 in the sliding direction) h2 will also have a size different from the maximum gap h2 in the neutral state shown in FIG. 6.

In more detail, in a case where the state indicated by the solid line in FIG. 12 is a state in the middle of upward movement of the piston 5, on the right and left side skirt sliding surfaces 31S, their upper end portions will have the maximum gap h2 as their gap sizes. On the other hand, in a case where the state shown in FIG. 12 is a state in the middle of downward movement of the piston 5, on the right and left side skirt sliding surfaces 31S, their lower end portions will have the maximum gap h2 as their gap sizes.

Then, the skirt sliding surface 31S is configured such that the minimum gap h1 becomes within the above appropriate range also in the state indicated by the solid line in FIG. 12, and such that the gap ratio m (h2/h1) becomes within the appropriate range.

(6) Sliding Surface Structure of Crank Mechanism

In the present embodiment, the profile of the sliding surface Sa is applied also to a sliding part of the crank mechanism.

<Crank Bearing>

As described above, the outer peripheral wall 71A of the crank journal portion 71 and the inner peripheral wall 40A of the crank bearing 40 slide relatively to each other, and the inner peripheral wall 40A of the crank bearing 40 will have the profile of the sliding surface Sa.

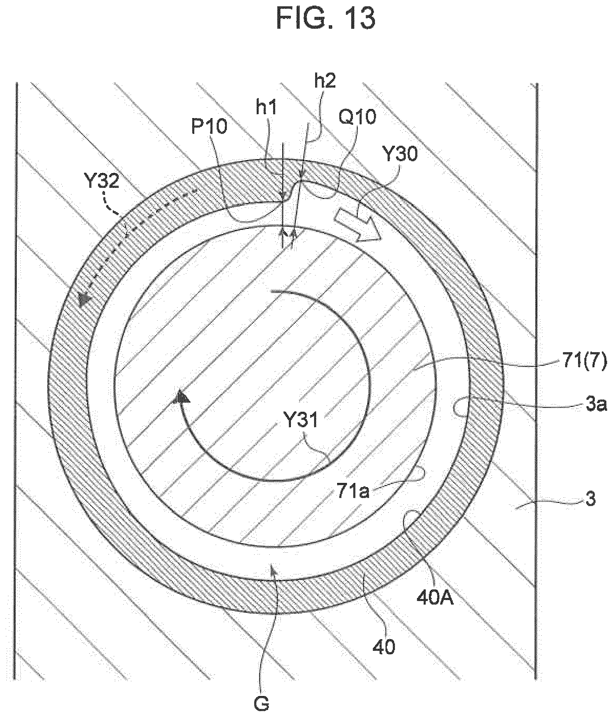

FIG. 13 is a schematic sectional view of the surroundings of the crank journal portion 71 taken along line XIII-XIII in FIG. 2.

The crank bearing 40 has a size such that the gap G is formed in between the crank journal portion 71 over the entire circumference of the crank bearing. The crank journal portion 71 has a sectional shape which is a substantially perfect circle. On the other hand, the inner peripheral wall 40A of the crank bearing 40 has a shape projecting toward the outer peripheral wall 71A of the crank journal portion 71. Specifically, the size of the gap G is gradually reduced toward a rotation direction Y31 of the crank journal portion 71, i.e., a direction opposite to a sliding direction Y32 of the crank bearing 40 (a direction opposite to the rotation direction Y32 of the crank bearing 40 relative to the crank journal portion 71). In the present embodiment, the inner peripheral wall 40A of the crank bearing 40 as a whole is a projecting-shape portion having such a projecting shape. Consequently, there are arranged adjacent to each other an apical portion P10 at which the size of the gap G is the smallest, and a bottom edge portion Q10 positioned on the more downstream side of the crank bearing 40 in the sliding direction Y32 than the apical portion P10 and having the largest size of the gap G. In the example in FIG. 13, the inner peripheral wall 40A of the crank bearing 40 has a section spirally increased along the sliding direction Y32 from the apical portion P10 toward the bottom edge portion Q10, which causes change of the size of the gap G.

When the crank journal portion 71 consequently rotates, i.e., when the crank bearing 40 rotates relatively to the crank journal portion to slide against the outer peripheral wall 71A of the crank journal portion 71, the fluid F flows from the bottom edge portion Q10 side toward the apical portion P10 as indicated by an arrow Y30 in FIG. 13. This causes sliding flotage to be generated between the outer peripheral wall 71A of the crank journal portion 71 and the inner peripheral wall 40A of the crank bearing 40, the sliding flotage functioning in a direction in which the walls 71A and 40A are spaced apart from each other.

Then, in the present embodiment, an optimum profile of the sliding surface Sa is applied to the inner peripheral wall 40A of the crank bearing 40 such that high sliding flotage can be obtained also between the outer peripheral wall 71A of the crank journal portion 71 and the inner peripheral wall 40A of the crank bearing 40.

Specifically, assuming that the gap ratio m = h2/h1, it is set that a ratio m = h2/h1 is a predetermined value within a range of 1.5 or more and 5.0 or less, h1 representing the minimum gap h1 which is the minimum value among the sizes of the gap G between the outer peripheral wall 71A of the crank journal portion 71 and the inner peripheral wall 40A of the crank bearing 40, i.e., representing the spaced distance h1 between the apical portion P10 and the outer peripheral wall 71A of the crank journal portion 71, and h2 representing the maximum gap h2 which is the maximum value among the sizes of the gap G, i.e., representing the spaced distance h2 between the bottom edge portion Q10 and the outer peripheral wall 71A of the crank journal portion 71.

It is also configured in the present embodiment such that an air layer is formed between the outer peripheral wall 71A of the crank journal portion 71 and the inner peripheral wall 40A of the crank bearing 40. Then, the minimum gap h1 is set to be a predetermined value of 0.5 $\mu$m or more and 1.5 $\mu$m or less such that the coefficient of friction $\mu$ between these walls 71A and 40A is small.

In addition, in the present embodiment, surface roughness of each of the outer peripheral wall 71A of the crank journal portion 71 and the inner peripheral wall 40A of the crank bearing 40 is set to be 0.4 $\mu$m or less.

<Crank Pin Bearing>

As described above, the outer peripheral wall 72A of the crank pin 72 and the inner peripheral wall 83A of the crank pin bearing 83 slide relatively to each other, and the inner peripheral wall 83A of the crank pin bearing 83 is configured to have the profile of the above sliding surface Sa.

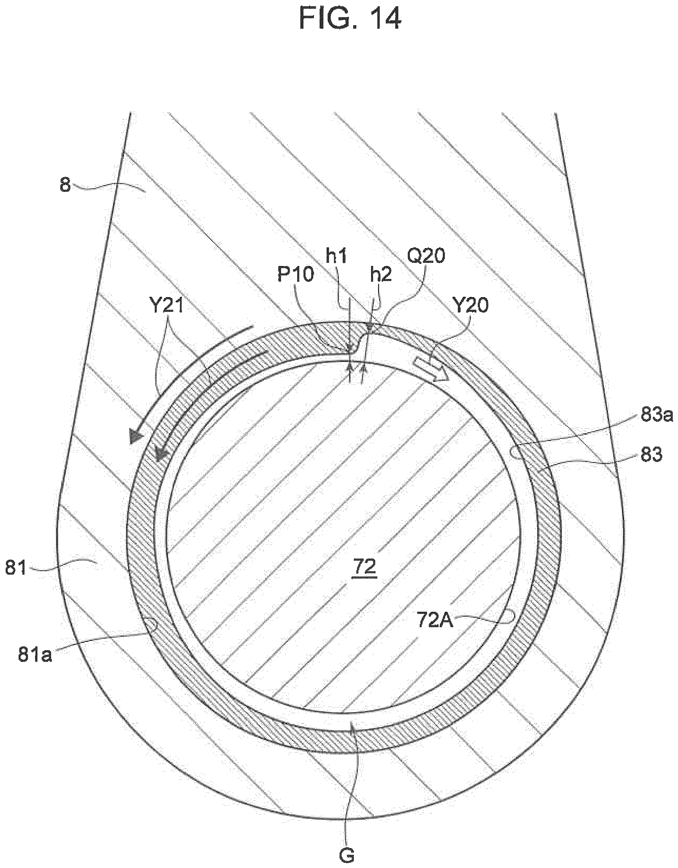

FIG. 14 is a schematic view of the surroundings of the connecting rod large end portion 81, which is an enlarged view of a part of FIG. 3.

The crank pin bearing 83 has a size such that the gap G is formed between its inner peripheral wall 83A and the outer peripheral wall 72A of the crank pin 72. The crank pin 72 has a sectional shape which is a substantially perfect circle. On the other hand, the inner peripheral wall 83A of the crank pin bearing 83 has a shape projecting toward the outer peripheral wall 72A of the crank pin 72. Specifically, the size of the gap G is gradually reduced toward a direction opposite to the sliding direction Y21 of the crank pin bearing 83 against the crank pin 72. In the present embodiment, the inner peripheral wall 83A of the crank pin bearing 83 as a whole is a projecting-shape portion having such a projecting shape. Consequently, there are arranged adjacent to each other an apical portion P20 at which the size of the gap G is the smallest, and a bottom edge portion Q20 positioned on the more downstream side of the crank pin bearing 83 in the sliding direction Y21 than the apical portion P20. In the example in FIG. 14, the inner peripheral wall 83A of the crank pin bearing 83 has a section spirally increased along the sliding direction Y21 from the apical portion P20 toward the bottom edge portion Q20, which causes change of the size of the gap G.

Then, the gap ratio m = h2/h1, which is a ratio of the maximum gap h2 as a size of the gap G at the bottom edge portion Q20 to the minimum gap h1 as a size of the gap G at the apical portion P20, is set to be a predetermined value of 1.5 or more and 5.0 or less. It is also configured such that an air layer is formed between the inner peripheral wall 83A of the crank pin bearing 83 and the outer peripheral wall 72A of the crank pin 72, and the minimum gap h1 is set to be 0.5 $\mu$m or more and 1.5 $\mu$m or less.

In addition, in the present embodiment, surface roughness of each of the inner peripheral wall 83A of the crank pin bearing 83 and the outer peripheral wall 72A of the crank pin 72 is set to be 0.4 $\mu$m or less.

(7) Effects etc.

As described in the foregoing, in the present embodiment, the skirt sliding surface 31S of the skirt main body portion 31 in the piston 5 has a shape projecting toward the inner peripheral wall 2A of the cylinder 2, and has a gap ratio m set to be 1.5 or more and 5.0 or less. Further, while an air layer is formed in the gap G between the skirt sliding surface 31S and the inner peripheral wall 2A of the cylinder 2, the minimum gap h1 is set to be a predetermined value within a range of 0.5 $\mu$m or more and 1.5 $\mu$m or less.

Accordingly, it is possible to generate high sliding flotage between the skirt sliding surface 31S and the inner peripheral wall 2A of the cylinder 2 and suppress the coefficient of friction $\mu$ generated therebetween to be small to enable the skirt sliding surface 31S to reliably float from the inner peripheral wall 2A of the cylinder 2, thereby remarkably suppressing a friction resistance to be small which is generated between the skirt sliding surface 31S and the inner peripheral wall 2A of the cylinder 2 during reciprocation of the piston 5. This then leads to effective reduction of a mechanical loss in the engine as a whole. Consequently, the fuel consumption performance can be increased.

Additionally, in the present embodiment, a profile of a sliding surface which realizes this high sliding flotage and reduces the coefficient of friction $\mu$ is applied to the inner peripheral wall 40A of the crank bearing 40 and to the inner peripheral wall 83A of the crank pin bearing 83 as well. Therefore, friction resistance generated during sliding of these portions can be reduced to drastically reduce a mechanical loss.

In particular, it is configured in the present embodiment that the air layers are formed between the skirt sliding surface 31S and the inner peripheral wall 2A of the cylinder 2, between the outer peripheral wall 71A of the crank journal portion 71 and the inner peripheral wall 40A of the crank bearing 40, and between the inner peripheral wall 83A of the crank pin bearing 83 and the outer peripheral wall 72A of the crank pin 72. It is therefore possible to reliably suppress the coefficient of friction $\mu$ between these portions, as well as simplifies a configuration because additional supply of neither oil nor water is required.

Additionally, the skirt sliding surface 31S and the inner peripheral wall 2A of the cylinder 2 are formed of the same stainless steel. It is therefore possible to suppress the thermal expansion difference between these portions to be small, to maintain high precision of the minimum gap h1 and high precision of the gap ratio m.

From the same reason, the outer peripheral wall 71A of the crank journal portion 71 (the crank journal portion 71 and the crank shaft 7) and the inner peripheral wall 40A of the crank bearing 40 (the cylinder block 3), and the inner peripheral wall 83A of the crank pin bearing 83 (the crank pin bearing 83) and the outer peripheral wall 72A of the crank pin 72 (the crank pin 72 and the crank shaft 7) are preferably formed of the same material such as stainless steel.

(8) Second Embodiment Related to Piston Structure

Although in the above embodiment, the description has been made of a case where the piston head and the skirt portion are integrally formed, these portions can be configured as separate bodies. Further, in a case where these are configured as separate bodies, the skirt portion may be configured to suppress its oscillation which follows oscillation of the piston head.

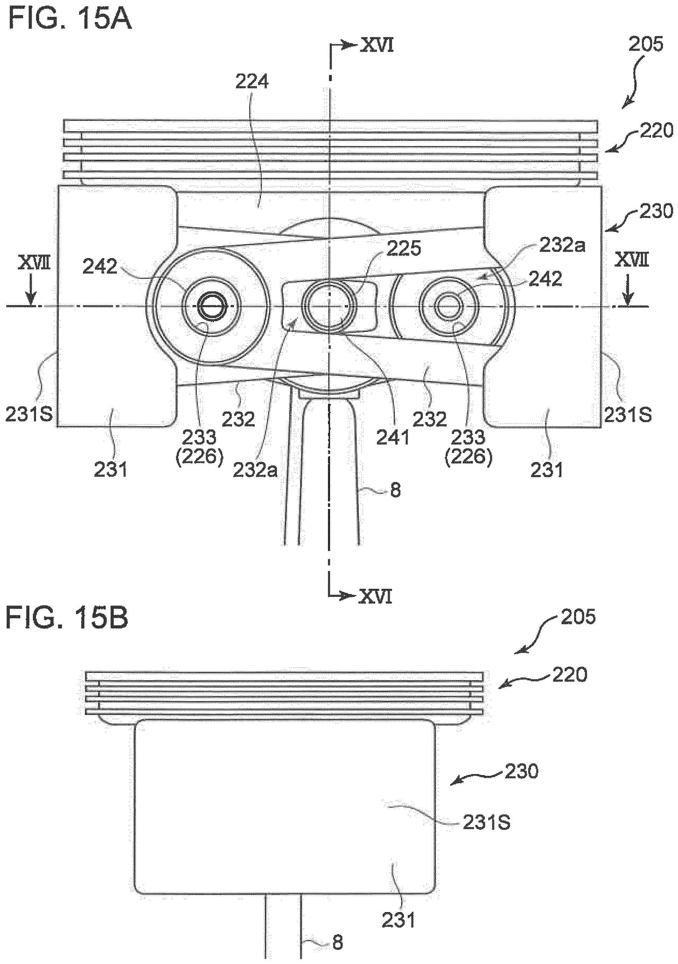

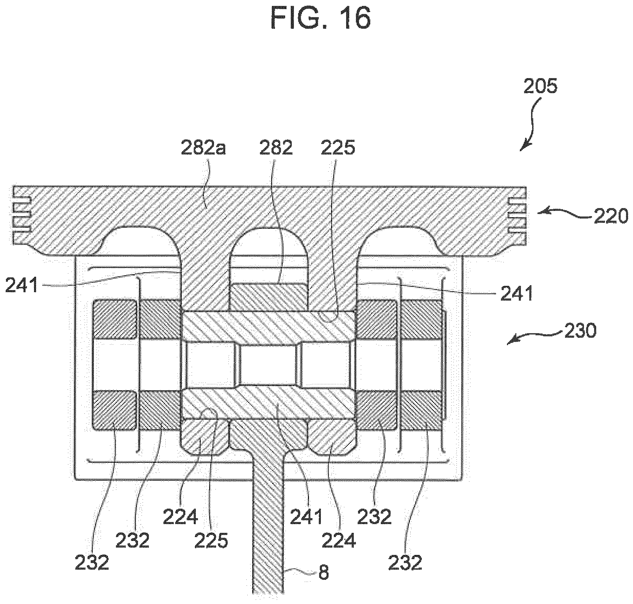

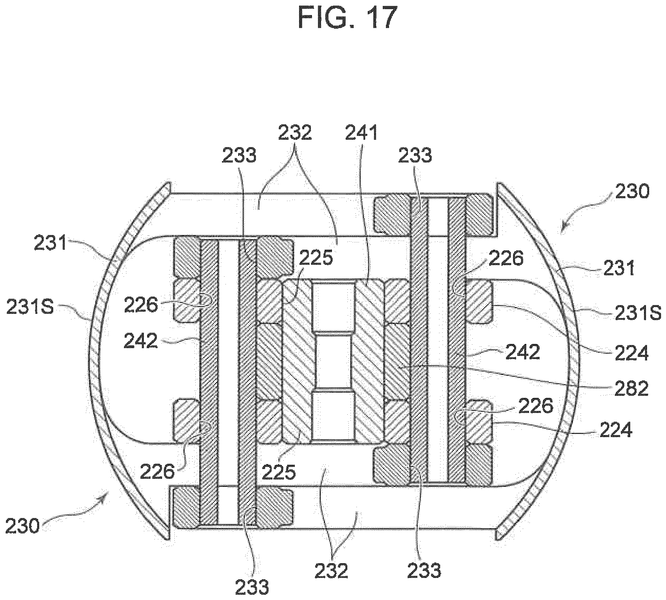

FIG. 15A is a front view of a piston 205 according to a second embodiment in which a piston head portion 220 and a skirt portion 230 are formed as separate bodies, FIG. 15B is a side view of the piston 205, FIG. 16 is a sectional view taken along line XVI-XVI in FIG. 15A, and FIG. 17 is a sectional view taken along line XVII-XVII in FIG. 15A. In the following, description of the second embodiment will be made assuming a right-left direction in FIG. 15A to be simply as the right-left direction.

In the second embodiment, the skirt portion 230 is configured with two members, and the piston 205 has a pair of right and left skirt portions 230, 230.

As shown in FIG. 16, the piston head portion 220 has a pair of piston bosses 224 extending downward. These piston bosses 224 are formed with piston pin holes 225. The connecting rod 8 is rotatably supported by the piston head portion 220 by insertion of piston pins 241 into a through hole 282a and the piston pin holes 225 formed in an upper end portion 282. As shown in FIG. 17 and the like, the pair of piston bosses 224 is formed with two skirt pin holes 226. These pair skirt pin holes 226 are arranged at the same height with the piston pin holes 225 provided therebetween.

The pair of skirt portions 230 each includes a skirt main body portion 231 and a pair of arm portions 232.

Each skirt main body portion 231 is a circular-shaped flat plate member along a shape of the inner peripheral wall 2A of the cylinder 2 and includes a skirt sliding surface 231S on a surface opposed to the inner peripheral wall 2A. Each skirt sliding surface 231S has an arch-shape projecting toward the inner peripheral wall 2A of the cylinder 2 similarly to the first embodiment. The pair of skirt portions 230 is arranged so as to have their skirt sliding surfaces 231S facing to opposite directions.

In each skirt portion 230, the pair of arm portions 232 extends from both circumferential ends of the skirt main body portion 231 toward a radially inner side of the cylinder 2, the circumferential ends being on a rear surface opposite to the skirt sliding surface 231S of the skirt main body portion 231.

Of these arm portions 232, one arm portion 232 of the right-side skirt portion 230 and one arm portion 232 of the left-side skirt portion 230 are adjacent to each other, and the other arm portion 232 of the right-side skirt portion 230 and the other arm portion 232 of the left-side skirt portion 230 are arranged to be adjacent to each other. A pin insertion hole 233 is bored near a front end portion of each arm portion 232.

The right-side skirt portion 230 is connected to the piston boss 224 in a state of capable of swinging around an axis of a skirt pin 242 as a result of insertion of the skirt pin 242 into the pin insertion holes 233 provided at the front end portions of the two arm portions 232 and into the left-side skirt pin hole 226 formed in the piston boss 224. The left-side skirt portion 230 is connected to the piston boss 224 in a state of capable of swinging around the axis of the skirt pin 242 as a result of insertion of the skirt pin 242 into the pin insertion holes 233 provided at the front end portions of the two arm portions 232 and into the right-side skirt pin hole 226 formed in the piston boss 224. In this manner, in the present embodiment, the piston 205 is configured to have a tilt mechanism which allows each skirt portion 230 to be capable of swinging in the up-down direction within a predetermined range.

As shown in FIG. 15A, with an opening portion 232a formed at the center of each arm portion 232 in the up-down direction, the skirt pin 242 of one skirt portion 230 passes through the opening portion 232a of the arm portion 232 of the other skirt portion 230 and connects to the arm portion 232 of the one skirt portion 230. Consequently, swinging of the one skirt portion 230 is regulated within a predetermined range by the skirt pin 242 of the other skirt portion 230.

<Operation of Skirt Portion>

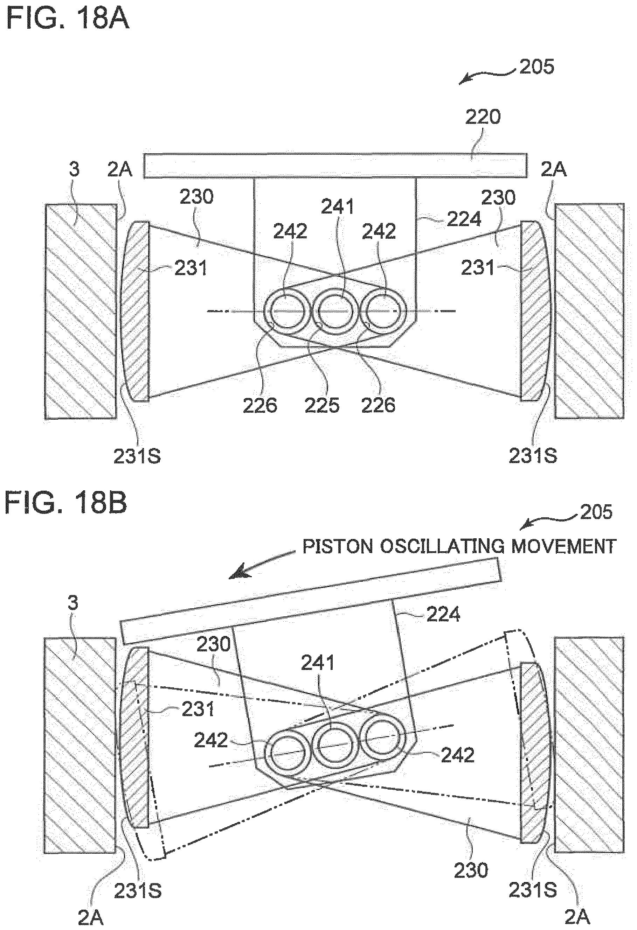

Thus configured second embodiment suppresses oscillation of the skirt portion 230 during oscillation of the piston 205. Description will be made with reference to FIG. 18A and FIG. 18B. FIG. 18A is a schematic view of the skirt portion 230 in the neutral state and FIG. 18B is a schematic view of the skirt portion 230 when oscillation occurs.

In the second embodiment, as shown in FIG. 18B, when the piston 205 oscillates to lean leftward, the piston boss 224 leans leftward, so that the right-side skirt pin hole 226 and the right-side skirt pin 242 inserted in the right-side skirt pin hole 226 will be positioned above the left-side skirt pin hole 226 and the left-side skirt pin 242 inserted in the left-side skirt pin hole 226.

Here, if the skirt portion 230 is incapable of swinging relative to the skirt pin 242, the skirt portion 230 leans together with the piston head portion 220 as indicated by a broken line in FIG. 18B.

For coping with the leaning, the present embodiment enables the skirt portion 230 to be brought into the neutral state or take a position approximate to the same as a result of swinging of the skirt portion 230 relative to the skirt pin 242 as indicated by a solid line in FIG. 18B. In other words, oscillation of the skirt portion 230 can be suppressed. Accordingly, by making a profile of the skirt sliding surface 231S of the skirt portion 230 (the size of the minimum gap $h1$ and the range of the gap ratio $m = h1/h2$) be an appropriate profile in the neutral state, even when the piston 5 oscillates, the profile of the skirt sliding surface 231S can be maintained in an appropriate state more reliably.

On the other hand, in the second embodiment, when acceleration (deceleration) acts on the piston 205, the skirt portion 230 might swing from the neutral state.

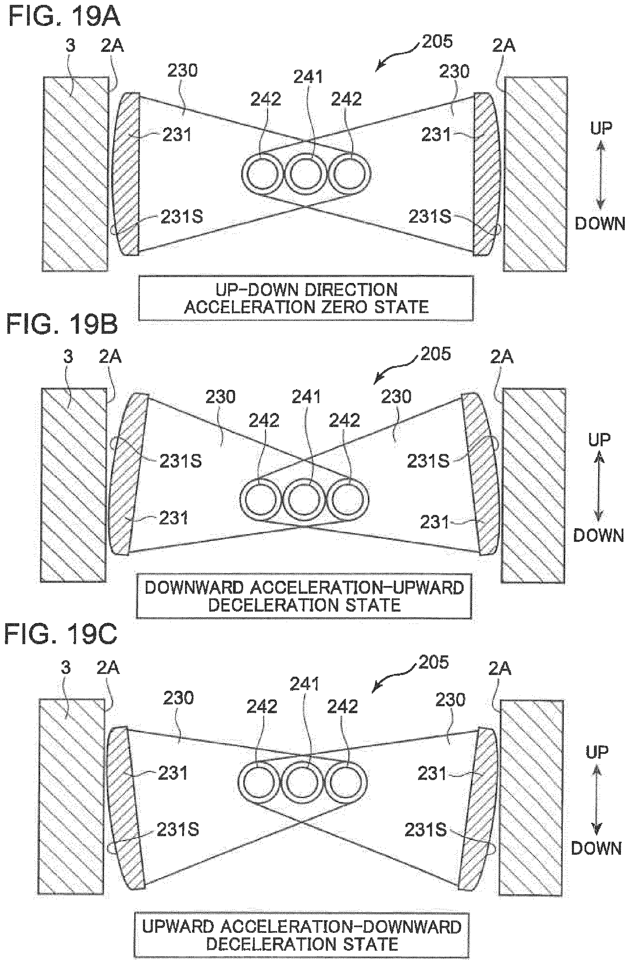

FIGS. 19A to 19C are views for explaining a swing state of the skirt portion 230 as the piston 205 accelerates or decelerates. FIG. 19A shows a position of the skirt portion 230 in a state where with the piston 205 being in the neutral state, neither downward (a direction from TDC toward BDC) acceleration nor upward (a direction from BDC toward TDC) acceleration acts on the piston 205 (e.g., a state where a crank angle = 90°, 270°).

FIG. 19B shows a position of the skirt portion 230 in a state where downward acceleration or upward deceleration acts on the piston 5. As shown in FIG. 19B, when downward acceleration or upward deceleration acts on the piston 5, inertia causes the skirt portion 230 to continue halting at a site, which is followed by the swing state of the skirt portion 230 in which the portion takes a position of leaning upward.

Accordingly, in the second embodiment, it is preferable to make the profile (the minimum gap and the gap ratio) of the skirt sliding surface 231S of the skirt portion 230 be an appropriate profile also in the upward swing state.

Here, in a case shown in FIG. 19B, the gap between the skirt sliding surface 231S and the inner peripheral wall 2A of the cylinder 2 becomes narrower on a lower end portion side than on an upper end portion side (illustrated in exaggeration). Then, when downward acceleration is applied to the piston 5, the fluid F flows into the gap mostly from the lower end portion side. Accordingly, it is desirable to set a maximum gap in the lower end portion such that a gap ratio m on the lower end portion side is near the gap ratio m = 2.2 by which the highest flotage can be obtained.

FIG. 19C shows a position of the skirt portion 230 in a state where upward acceleration or downward deceleration acts on the piston 5. In this case, conversely to FIG. 18B, the skirt portion 230 enters the swing state of leaning downward in both of the above states.

Accordingly, in the second embodiment, it is preferable to make the profile (the minimum gap and the gap ratio) of the skirt sliding surface 231S of the skirt portion 230 be the above appropriate profile also in the downward swing state.

In this case, the gap between the skirt sliding surface 231S and the inner peripheral wall 2A of the cylinder 2 becomes narrower on the upper end portion side than on the lower end portion side. Then, when upward acceleration is applied to the piston 5, the fluid F flows into the gap mostly from the upper end portion side. Accordingly, it is desirable to set a maximum gap in the upper end portion such that a gap ratio m on the upper end portion side is near the gap ratio m = 2.2 by which the highest flotage can be obtained.

(9) Other Modifications

Although in the embodiment, the description has been made in a case where an air layer is formed with air present as the fluid F in the gaps G between the skirt sliding surface 31S and the inner peripheral wall 2A of the cylinder 2, between the outer peripheral wall 71A of the crank journal portion 71 and the inner peripheral wall 40A of the crank bearing 40, and between the inner peripheral wall 83A of the crank pin bearing 83 and the outer peripheral wall 72A of the crank pin 72, the fluid F to be present in the gap G is not limited to air but may be water or oil.

Specifically, in a third embodiment of the present invention, water is present as the fluid F in at least one of the gap G between the skirt sliding surface 31S and the inner peripheral wall 2A of the cylinder 2, the gap G between the outer peripheral wall 71A of the crank journal portion 71 and the inner peripheral wall 40A of the crank bearing 40, and the gap G between the inner peripheral wall 83A of the crank pin bearing 83 and the outer peripheral wall 72A of the crank pin 72. Then, in the third embodiment, a range of the minimum gap h1 of the gap G at room temperature is set to be 3 $\mu$m or more and 11 $\mu$m or less so as to reduce a coefficient of friction between both the sliding surfaces and increase force in a direction to space the above both sliding surfaces apart.

Additionally, in a fourth embodiment of the present invention, oil is present as the fluid F in at least one of the gap G between the skirt sliding surface 31S and the inner peripheral wall 2A of the cylinder 2, the gap G between the outer peripheral wall 71A of the crank journal portion 71 and the inner peripheral wall 40A of the crank bearing 40, and the gap G between the inner peripheral wall 83A of the crank pin bearing 83 and the outer peripheral wall 72A of the crank pin 72. Then, in the fourth embodiment, a range of the minimum gap h1 of the gap G at room temperature is set to be 15 $\mu$m or more and 40 $\mu$m or less so as to reduce a coefficient of friction between both the sliding surfaces and increase force in a direction to space the above both sliding surfaces apart.

Here, in a case where the fluid F to be introduced into the gap G is oil, since the sliding surface and the slid surface opposed to each other with the gap G provided therebetween will not rust, these sliding surfaces may be formed of an aluminum material. For example, the skirt sliding surface 31S and the inner peripheral wall 2A of the cylinder 2 are formed of an aluminum material and oil is caused to be present as the fluid F between these portions.

It is also possible to switch the fluid F among air, water, and oil according to an operation state of the engine and the like. Then, in a case of thus using air, water, and oil in combination as the fluid F (in a case where at least air and oil are used in combination), the range of the minimum gap h1 needs only include all the appropriate ranges for the respective fluids F and the minimum gap h1 needs only be within the range of 0.5 $\mu$m or more and 40 $\mu$m or less.

Also in the above embodiment, there is shown the example where the skirt sliding surface 31S has an arch-shape. However, a mode of the skirt sliding surface 31S is not limited as long as the surface has a projecting-shape which projects toward the inner peripheral wall 2A in a section along the center axis X1 of the cylinder 2. In other words, as long as a part (the apical portion Ps) forming the minimum gap h1 and a part (the bottom edge portion Qs) forming the maximum gap h2 are provided, a shape between these parts may not necessarily be an arch-shaped curved surface, but may have various shapes. For example, a part or all of a part between the apical portion P and the bottom edge portion Q may be a surface linearly leaning in a section along the center axis X1 of the cylinder 2 or a surface spirally leaning.

Similarly, the outer peripheral wall 71A of the crank journal portion 71 and the inner peripheral wall 83A of the crank pin bearing 83 also need only have a part forming the minimum gap h1 (the apical portions P10, P20) and a part forming the maximum gap h2 (the bottom edge portions Q10, Q20) or may have other shape.

Also, although in the above embodiment, the description has been made of a case where the skirt sliding surface S31 and the inner peripheral wall 2A of the cylinder 2 are formed of stainless, materials of these portions are not limited to stainless. For example, these portions may be formed of cast steel etc. However, since stainless has a small coefficient of thermal expansion as described above, use of stainless suppresses the minimum gap h1 and the gap ratio m from deviating from appropriate ranges, the deviation being caused by thermal expansion. Additionally, in a case where water is used as the fluid F to be present between the skirt sliding surface S31 and the inner peripheral wall 2A of the cylinder 2, it is preferable to use stainless because these portions might rust. For the same reason, it is preferable to use stainless also for the crank shaft 7 and the connecting rod 8.

Additionally, the skirt sliding surface S31 and the inner peripheral wall 2A of the cylinder 2, the outer peripheral wall 71A of the crank journal portion 71, and the inner peripheral wall 83A of the crank pin bearing 83 can be formed of respective different materials. However, use of the same material for these portions as described above can suppress an effect to be exercised on the minimum gap h1 and the gap ratio m by the thermal expansion difference to increase precision thereof.

The above described specific embodiments mainly include an invention having the following configurations.

The reciprocating piston engine, which is provided with a piston reciprocating in a cylinder and a crank mechanism, includes a first member having a first sliding surface; and a second member which has a second sliding surface opposed to the first sliding surface with a gap provided between the first sliding surface and the second sliding surface and moves relative to the first member in a predetermined sliding direction during reciprocation of the piston, in which the second sliding surface has a projecting-shape portion projecting toward the first sliding surface in a section along the sliding direction, the projecting-shape portion includes an apical portion which is a most projecting part, and a bottom edge portion which is arranged at least on a downstream side of the apical portion in the sliding direction and is at a position most spaced apart from the first sliding surface, and when in the projecting-shape portion, the gap at the apical portion is assumed to be a minimum gap h1 and the gap at the bottom edge portion is assumed to be a maximum gap h2, the minimum gap h1 and the maximum gap h2 are set to be within the following range in a state where the first member and the second member are at room temperature: h1 = 0.5 $\mu$m to 40 $\mu$m; and h2/h1 = 1.5 to 5.0.

In the engine, a simple configuration enables fluid flowing into a part between the second sliding surface and the first sliding surface to cause a force to function in a direction to space both the sliding surfaces apart, the configuration having the second sliding surface of the second member provided with the projecting-shape portion. Further, the size of the minimum gap h1 and the ratio of the minimum gap h1 to the maximum gap h2 are set to be within the above range. It is therefore possible to reduce a coefficient of friction between both the sliding surfaces and increase a force in a direction to space both the sliding surfaces apart. It is accordingly possible to reliably float the second member from the first member to remarkably reduce a friction resistance and consequently a mechanical loss caused during sliding of the second member.

It is preferable that an air layer is formed between the first sliding surface and the second sliding surface, and the minimum gap h1 is set to be within the range of 0.5 $\mu$m or more and 1.5 $\mu$m or less in a state where the first member and the second member are at room temperature.

According to this configuration, by causing air, which has a smaller coefficient of friction than oil and the like, to be present between both the sliding surfaces and setting the minimum gap h1 to be within the above range, a friction resistance generated between both the sliding surfaces can be reliably reduced.

It is preferable that a water layer is formed between the first sliding surface and the second sliding surface, and the minimum gap h1 is set to be within the range of 3 $\mu$m or more and 11 $\mu$m or less in a state where the first member and the second member are at room temperature.

According to this configuration, in a case of causing water to be present between the first sliding surface and the second sliding surface, a friction resistance generated between both the sliding surfaces can be reliably reduced by setting the minimum gap h1 to be within the above range.

It is preferable that an oil layer is formed between the first sliding surface and the second sliding surface, and the minimum gap h1 is set to be within the range of 15 $\mu$m or more and 40 $\mu$m or less in a state where the first member and the second member are at room temperature.

According to this configuration, in a case of causing oil to be present between the first sliding surface and the second sliding surface, a friction resistance generated between both the sliding surfaces can be reliably reduced by setting the minimum gap h1 to be within the above range.

The second member is preferably made of a stainless material.

This enables the second sliding surface from rusting in a case where a water layer is formed between the second sliding surface and the first sliding surface.

The first member and the second member are preferably made of the same material.

This enables variation of the minimum gap h1 and the maximum gap h2 caused by a thermal expansion difference to be suppressed, thereby enabling these gaps to fall within the above appropriate range more reliably.

It is preferable that the first member corresponds to the cylinder, the second member corresponds to a skirt portion of the piston reciprocating in the cylinder, and the skirt portion is provided with the projecting-shape portion, the projecting-shape portion being provided on an outer peripheral wall opposed to an inner peripheral wall of the cylinder.

This enables effective reduction in a mechanical loss generated in the whole engine by reducing a friction resistance generated between the skirt portion of the piston and the inner peripheral wall of the cylinder during reciprocation of the piston.

It is preferable that a crank shaft coupled to the piston to rotate as the piston reciprocates, and a crank bearing rotatably supporting the crank shaft are provided, in which the first member corresponds to the crank shaft, the second member corresponds to the crank bearing, and the crank bearing is provided with the projecting-shape member, the projecting-shape member being provided on an inner peripheral wall opposed to an outer peripheral wall of the crank shaft.

This enables reduction in a friction resistance generated between the crank shaft and the bearing during rotation of the crank shaft.

It is preferable that a connecting rod which couples the piston and a crank shaft is provided, in which the connecting rod includes a crank pin bearing into which a crank pin forming a part of the crank shaft is inserted so as to rotate relative to the crank pin, the first member corresponds to the crank pin, the second member corresponds to the crank pin bearing, and the crank pin bearing is provided with the projecting-shape member, the projecting-shape member being provided on an inner peripheral wall opposed to an outer peripheral wall of the crank pin.

This enable reduction in a friction resistance generated between the connecting rod and the crank pin.

**Claims**

1. A reciprocating piston engine provided with a piston reciprocating in a cylinder and a crank mechanism, the reciprocating piston engine comprising:

   a first member having a first sliding surface; and
   a second member which has a second sliding surface opposed to the first sliding surface with a gap provided between the first sliding surface and the second sliding surface and moves relative to the first member in a predetermined sliding direction during reciprocation of the piston,
   wherein
   the second sliding surface has a projecting-shape portion projecting toward the first sliding surface in a section along the sliding direction,
   the projecting-shape portion includes an apical portion which is a most projecting part, and a bottom edge portion which is arranged at least on a downstream side of the apical portion in the sliding direction and is at a position most spaced apart from the first sliding surface, and
   when in the projecting-shape portion, the gap at the apical portion is assumed to be a minimum gap h1 and the gap at the bottom edge portion is assumed to be a maximum gap h2, the minimum gap h1 and the maximum gap h2 are set to be within the following range in a state where the first member and the second member are at room temperature:

   h1 = 0.5 $\mu$m to 40 $\mu$m; and
   h2/h1 = 1.5 to 5.0.

2. The reciprocating piston engine according to claim 1, wherein
   an air layer is formed between the first sliding surface and the second sliding surface, and
   the minimum gap h1 is set to be within the range of 0.5 $\mu$m or more and 1.5 $\mu$m or less in a state where the first member and the second member are at room temperature.

3. The reciprocating piston engine according to claim 1, wherein
   a water layer is formed between the first sliding surface and the second sliding surface, and
   the minimum gap h1 is set to be within the range of 3 $\mu$m or more and 11 $\mu$m or less in a state where the first member and the second member are at room temperature.

4. The reciprocating piston engine according to claim 1, wherein
an oil layer is formed between the first sliding surface and the second sliding surface, and
the minimum gap h1 is set to be within the range of 15 $\mu$m or more and 40 $\mu$m or less in a state where the first member and the second member are at room temperature.

5. The reciprocating piston engine according to any one of claims 1 to 3, wherein the second member is made of a stainless material.

6. The reciprocating piston engine according to any one of claims 1 to 5, wherein the first member and the second member are made of the same material.

7. The reciprocating piston engine according to any one of claims 1 to 6, wherein
the first member corresponds to the cylinder,
the second member corresponds to a skirt portion of the piston reciprocating in the cylinder, and
the skirt portion is provided with the projecting-shape portion, the projecting-shape portion being provided on an outer peripheral wall opposed to an inner peripheral wall of the cylinder.

8. The reciprocating piston engine according to any one of claims 1 to 6, further comprising:

a crank shaft coupled to the piston to rotate as the piston reciprocates; and
a crank bearing rotatably supporting the crank shaft,
wherein
the first member corresponds to the crank shaft,
the second member corresponds to the crank bearing, and
the crank bearing is provided with the projecting-shape member, the projecting-shape member being provided on an inner peripheral wall opposed to an outer peripheral wall of the crank shaft.

9. The reciprocating piston engine according to any one of claims 1 to 6, further comprising:

a connecting rod which couples the piston and a crank shaft,
wherein
the connecting rod includes a crank pin bearing into which a crank pin forming a part of the crank shaft is inserted so as to rotate relative to the crank pin,
the first member corresponds to the crank pin,
the second member corresponds to the crank pin bearing, and
the crank pin bearing is provided with the projecting-shape member, the projecting-shape member being provided on an inner peripheral wall opposed to an outer peripheral wall of the crank pin.

# FIG. 1

UP

DOWN

# FIG. 2

# FIG. 3

# FIG. 4

# FIG. 5

# FIG. 6

FIG. 7

## FIG. 8

# FIG. 9

# FIG. 10

# FIG. 11

RELATIONSHIP BETWEEN MINIMUM GAP h1
AND COEFFICIENT OF FRICTION μ

Legend:
- ━━━━ AIR
- ━ ‥ ━ ‥ ━ WATER
- ----- LOW-VISCOSITY OIL

EP 3 578 789 A1

# FIG. 12

# FIG. 13

# FIG. 14

## FIG. 15A

## FIG. 15B

FIG. 16

# FIG. 17

FIG. 18A

FIG. 18B

PISTON OSCILLATING MOVEMENT

FIG. 19A

UP-DOWN DIRECTION
ACCELERATION ZERO STATE

FIG. 19B

DOWNWARD ACCELERATION-UPWARD
DECELERATION STATE

FIG. 19C

UPWARD ACCELERATION-DOWNWARD
DECELERATION STATE

## INTERNATIONAL SEARCH REPORT

| International application No. |
| --- |
| PCT/JP2018/006484 |

**A. CLASSIFICATION OF SUBJECT MATTER**
Int.Cl. F02F3/00(2006.01)i, F02F7/00(2006.01)i, F16C9/02(2006.01)i, F16C17/02(2006.01)i, F16J1/02(2006.01)i, F16J1/04(2006.01)i

According to International Patent Classification (IPC) or to both national classification and IPC

**B. FIELDS SEARCHED**

Minimum documentation searched (classification system followed by classification symbols)
Int.Cl. F02F3/00-3/28, F16C3/00-9/06, 17/00-17/26, 33/00-33/28

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | JP 11-153061 A (KOMATSU LTD.) 08 June 1999, paragraphs [0006]-[0017], fig. 1-7<br>(Family: none) | 1, 4, 7<br>2-3, 5-7<br>8-9 |
| X<br>Y<br>A | JP 5-149198 A (TOYODA MACHINE WORKS LTD.) 15 June 1993, paragraphs [0010]-[0021], fig. 1-10<br>(Family: none) | 1, 4, 7<br>2-3, 5-7<br>8-9 |

☒ Further documents are listed in the continuation of Box C.       ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 20.04.2018 | 15.05.2018 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| International application No. |
| --- |
| PCT/JP2018/006484 |

C (Continuation). DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2011-80436 A (TOYOTA CENTRAL R&D LABS., INC.) 21 April 2011, paragraphs [0001]-[0011], [0026]-[0050], fig. 1, 2<br>(Family: none) | 1, 4, 7<br>2-3, 5-7<br>8-9 |
| X<br>Y<br>A | JP 2-102912 A (NDC CO., LTD.) 16 April 1990, page 4, upper right column, line 1 to lower left column, line 3, page 4, lower right column, line 18 to page 6, lower left column, line 1, fig. 1, 4<br>(Family: none) | 1, 4, 8-9<br>2-3, 5-6, 8-9<br>7 |
| Y | JP 2016-121597 A (MAZDA MOTOR) 07 July 2016, fig. 1<br>(Family: none) | 2, 5-9 |
| Y | JP 6-159087 A (NATIONAL INSTITUTE OF ADVANCED INDUSTRIAL SCIENCE AND TECHNOLOGY) 07 June 1994, paragraphs [0010], [0011], fig. 1<br>(Family: none) | 3, 5-9 |
| Y<br>A | JP 2004-316621 A (NAGAI, Masaya) 11 November 2004, abstract<br>(Family: none) | 5-7<br>8-9 |
| Y<br>A | JP 2008-519217 A (FEV MOTORENTECHNIK GMBH) 05 June 2008, paragraph [0028]<br>& US 2008/0092691 A1, paragraph [0037] & WO 2006/048052 A1 & DE 102004054128 A1 & CN 101076676 A | 5-6, 8-9<br>7 |
| Y<br>A | JP 7-259838 A (MITSUBISHI MATERIALS CORPORATION) 09 October 1995, paragraph [0011]<br>(Family: none) | 6, 8-9<br>7 |
| P, X | JP 2017-203408 A (TOYOTA INDUSTRIES CORPORATION) 16 November 2017, paragraphs [0007]-[0042], fig. 1-3, 8-10<br>(Family: none) | 1, 4, 7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2016121597 A